## Europäisches Patentamt
## European Patent Office
## Office européen des brevets

(11) Veröffentlichungsnummer: **0 017 004**
**B1**

(12) # EUROPÄISCHE PATENTSCHRIFT

(45) Veröffentlichungstag der Patentschrift:
20.07.83

(51) Int. Cl.³: **G 11 B 3/60**

(21) Anmeldenummer: **80101169.3**

(22) Anmeldetag: **07.03.80**

(54) **Einrichtung zur Schwingungsreduktion in einem Schallplattenspieler.**

(30) Priorität: **12.03.79 DE 2909564**

(43) Veröffentlichungstag der Anmeldung:
**15.10.80 Patentblatt 80/21**

(45) Bekanntmachung des Hinweises auf die Patenterteilung:
**20.07.83 Patentblatt 83/29**

(84) Benannte Vertragsstaaten:
**CH FR GB NL**

(56) Entgegenhaltungen:
**DE-A-1 937 429**
**DE-B-1 252 785**
**FR-A-2 172 156**
**GB-A-334 345**
**GB-A-1 320 834**
**US-A-1 372 991**
**US-A-2 397 804**
**US-A-2 588 012**
**US-A-2 762 678**
**US-A-3 047 297**
**US-A-3 185 428**
**US-A-3 450 379**

(73) Patentinhaber: **Gerätewerk Lahr GmbH, Eichgarten 6, D-7630 Lahr 1 (DE)**

(72) Erfinder: **Reitmayer, Gustav, Turmstrasse 27, D-7630 Lahr 1 (DE)**

(74) Vertreter: **Liedl, Gerhard et al, Steinsdorfstrasse 21-22, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Einrichtung zur Schwingungsreduktion in einem Schallplattenspieler

Die Erfindung betrifft eine Einrichtung zur Schwingungsreduktion in einem Schallplattenspieler, insbesondere für Rundfunkstudios, mit in einem Unterbau federnd gelagertem oder aufgehängtem Schwingchassis, welche ein Tonabnehmersystem und einen von einem Motor über einen Riemen oder direkt angetriebenen Plattenteller trägt.

Ein planmässiger Rundfunkbetrieb steht unter einem unerbittlichen Zeitdruck. Zum Beispiel müssen präzise Einblendungen in laufende Sendungen oder muss ein unmittelbarer Start von Anschlussereignissen ohne Zeitverlust möglich sein. Daher sind möglichst kurze Hochlaufzeiten des Plattentellers des Schallplattenspielers bis zur gewünschten Nenndrehzahl notwendig. Die Anwendung modernster Antriebsprinzipien, d. h. eines leichten Plattentellers, eines trägheitsarmen Rotors des Antriebsmotors sowie des Direktantriebs, erlaubt optimalen Schnellstart und Schnellstop. Allerdings treten hierbei erhebliche Reaktionsmomente auf. Diese Reaktionsmomente erzeugen in dem prinzipiell federnd aufgehängten Schwingchassis eine störende Rotationsschwingung um die zum Plattenteller senkrechte und in der Drehachse des Plattentellers liegende Achse (Z-Achse).

Rein laterale oder vertikale Momente können immer durch einen dynamisch balancierter Tonarm kompensiert werden. Rotationsmomente konnten dagegen bisher nicht kompensiert werden, weil die Masse des Tonarmes nicht gleich Null gehalten werden kann. Die Rotationsschwingungen wirken sich störend auf den Abtastvorgang aus und erzeugen, vor allem beim Start, unangenehme Gleichlauf- bzw. Tonhöhen-Schwankungen.

Ein aus der US-PS 3 185 428 bekanntes Befestigungssystem für einen zu lagernden Körper besitzt Schwingungsfreiheiten, welche auf fünf Freiheitsgrade beschränkt sind, nämlich auf zwei Freiheitsgrade in zwei zueinander senkrechten lateralen Richtungen (X- und Y-Richtung), einen Freiheitsgrad in vertikaler Richtung (Z-Richtung), die senkrecht zu den lateralen Richtungen verläuft und zwei Rotationsfreiheitsgrade um zwei in den beiden lateralen Richtungen liegenden Achsen. Die Verwendung des bekannten Befestigungssystems als Lagerung bzw. Aufhängung für das Schwingchassis eines Schallplattenspielers ist aus dieser Veröffentlichung nicht bekannt. Zudem besitzt das bekannte Befestigungssystem einen relativ aufwendigen Aufbau. Es benötigt nämlich zwei Zwischenrahmen und drei Federpaare, um den Rahmen, an welchem der zu lagernde Körper angeordnet ist, an einem Unterbau zu lagern.

Aufgabe der Erfindung ist es daher, eine Einrichtung zur Schwingungsreduktion in einem Schallplattenspieler zu schaffen, bei der mit geringem konstruktiven Aufwand Rotationsschwingungen um die zum Plattenteller senkrechte und in der Drehachse des Plattentellers liegende Achse (Z-Achse) auf ein Mindestmass reduziert bzw. vollkommen ausgeschaltet sind.

Diese Aufgabe wird bei der Einrichtung der eingangs genannten Art erfindungsgemäss dadurch gelöst, dass die Lagerung bzw. Aufhängung des Schwingchassis von einem Schwingsystem gebildet ist, das zwei senkrecht zueinander angeordnete und über einen Rahmen miteinander verbundene Stabfedernpaare aufweist, von denen das eine Stabfedernpaar mit dem Schwingchassis und das andere Stabfedernpaar mit dem Unterbau verbunden sind.

An den Verbindungsstellen zwischen Schwingsystem und Schwingchassis sowie Unterbau können Dämpfungs- bzw. Isoliermittel vorhanden sein.

Die Federstäbe können so ausgebildet sein, dass die Schwingfrequenz des Schwingchassis in vertikaler Richtung sich von der Schwingfrequenz bzw. den Schwingfrequenzen der beiden lateralen Richtung unterscheidet.

Die Federstäbe, die in Richtung der Stabachsen als Stützen wirken, können in einer Ebene angeordnet sein, um einen möglichst flachen Aufbau zu erzielen. Es ist natürlich auch möglich, die Federstäbe in unterschiedlichen Ebenen anzuordnen. Die Federstäbe der Federstabpaare können seitlich am Rahmen, über welchen die Federstäbe der beiden Federstabsysteme miteinander verbunden sind, angreifen. Wenn der Rahmen kreisrund ausgebildet ist, verlaufen die Federstäbe tangential zum Umfang des kreisrunden Rahmens.

Um unterschiedliche Schwingfrequenzen des Schwingchassis in vertikaler und lateraler bzw. horizontaler Richtung zu erzielen, können die Stabfedern um die jeweiligen Biegeachsen verschiedene Trägheitsmomente aufweisen. Ausserdem ist es von Vorteil, den Massenmittelpunkt des Schwingchassis mit dem Massenmittelpunkt des Schwingsystems zusammenfallen zu lassen.

Wenn die Stabfedern über die Verbindungsstellen am Rahmen hinausgeführt sind und die Enden der Stabfedern des einen Federpaares am Unterbau und die Enden der Stabfedern des anderen Federpaares am Schwingungschassis befestigt sind, ist es möglich, eine zusätzliche, in vertikaler Richtung wirkende Federung zu vermeiden.

Durch die Erfindung werden mittels einer einfach ausgebildeten Lagerung des Schwingchassis die beim Schnellstart und Schnellstop auftretenden Reaktionsmomente in den Unterbau des Schallplattenspielers abgeleitet. Dadurch ist es möglich, die Hochlauf- und Stopzeiten erheblich zu verringern und ein Nachschwingen um die Z-Achse zu verhüten. Im einzelnen soll die Erfindung anhand von Ausführungsbeispielen, welche in den Figuren dargestellt sind, näher erläutert werden. Es zeigen schematisch:

Fig. 1 eine Ansicht in der Schnittlinie I–I der Fig. 2,

Fig. 2 eine Draufsicht auf eine Einrichtung nach der Erfindung mit einem Teil des Schwingchassis, jedoch ohne Plattenteller und Motor,

Fig. 3 eine Ansicht in der Schnittlinie III–III der Fig. 4,

Fig. 4 eine Teildraufsicht auf eine andere Einrichtung nach der Erfindung, und

Fig. 5 eine Kreuzungsstelle zweier Stahlfedern in perspektivischer Ansicht.

Ein Schallplattenspieler mit einem Unterbau 1 besitzt ein Schwingchassis 2, das auf z.B. vier Schraubenfedern 3 im Unterbau gelagert bzw. aufgehängt ist. Auf dem Schwingchassis 2 befindet sich ein Plattenteller 4, der durch einen Motor 5 direkt oder über einen Riemen in Drehung versetzt wird. Der Motor 5 wird durch eine Zuleitung 6 gespeist. Auf den Plattenteller 4 kann die in üblicher Weise durch eine Motorachse 7 zentrierte Schallplatte aufgelegt werden. Die Beschränkung der federnden Aufhängung bzw. Lagerung auf fünf Freiheitsgrade, nämlich auf die zwei Freiheitsgrade in den beiden lateralen X- und Y-Richtungen und einen Freiheitsgrad in der vertikalen Z-Richtung sowie auf die zwei Rotations-Freiheitsgrade um die X- und Y-Achse erfolgt durch ein Schwingungssystem 8, das mit dem Schwingchassis 2 form- und kraftschlüssig verbunden ist. An Verbindungsstellen 16 zwischen Schwingsystem 8 und Schwingchassis 2 können Dämpfungs- bzw. Isoliermittel 15 vorgesehen sein.

Das Schwingsystem 8, das die Beschränkung auf fünf Freiheitsgrade bewirkt, kann vorzugsweise einen Rahmen 9, der über ein aus Stabfedern 10 bzw. 18 bestehendes Stützenpaar mit dem Unterbau 1 verbunden ist, aufweisen. Ein ebenfalls aus Stabfedern 11 bzw. 17 bestehendes Stützenpaar stellt die Verbindung zwischen Rahmen 9 und Schwingchassis 2 her. Die Stabfedern 10, 11 bzw. 17, 18 können um die jeweiligen Biegeachsen verschiedene Trägheitsmomente aufweisen. Dadurch können z.B. Durchbiegungen der Stabfedern bzw. Schwingungen des Chassis 2 in vertikaler Richtung mit einer anderen Frequenz schwingen als in lateraler bzw. horizontaler Richtung. Der Massenmittelpunkt des Schwingsystems 8, d.h. der Stabfedern 10 und 11 bzw. 17 und 18 sowie des Rahmens 9 fällt dabei mit dem Massenmittelpunkt des Schwingchassis 2 des Motors 5 einschliesslich Plattentellers 4 zusammen.

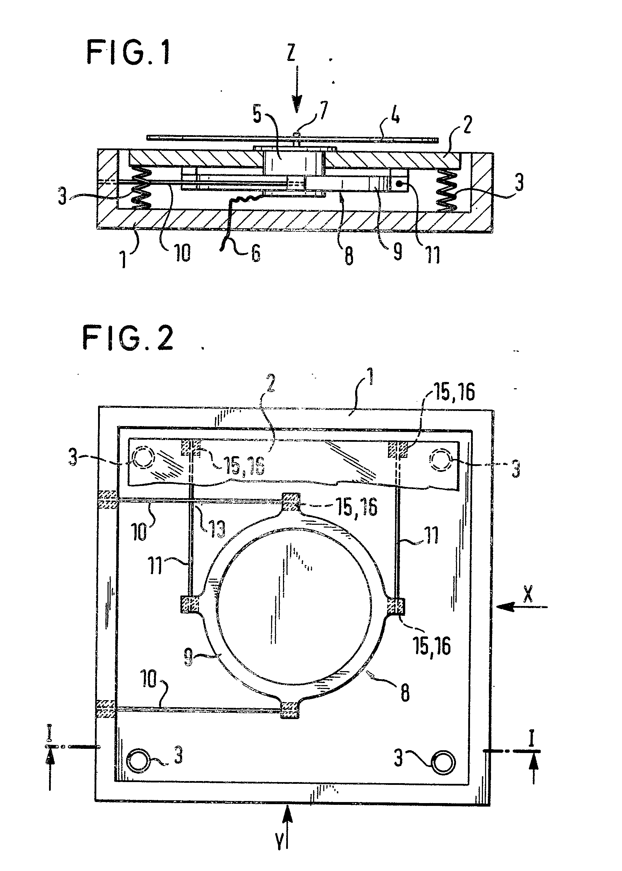

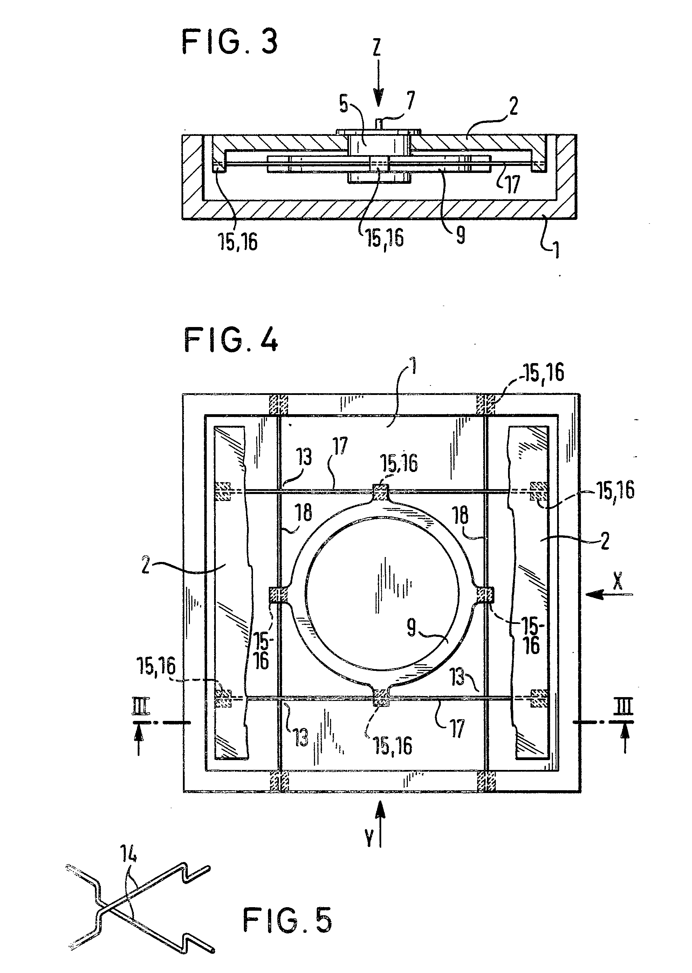

In den Fig. 1 und 2 ist das eine Stabfedernpaar 10 mit seinen einen Enden am Unterbau 1 fest eingespannt. Das andere Stabfedernpaar 11 ist mit seinen anderen Enden an den Verbindungsstellen 16 am Schwingchassis 2 fest eingespannt. Das Stabfedernpaar 10 bzw. 18 ist senkrecht zu dem Stabfedernpaar 11 bzw. 17 angeordnet. Die Stabfedernpaare 10, 11 bzw. 17, 18 liegen vorzugsweise in einer Ebene. An Kreuzungsstellen 13 können zur Berührungsfreiheit die Stützen 10 und/oder 11 bzw. 17 und/oder 18 geringe Krümmungen 14 (Fig. 5) aufweisen.

Wird, wie in den Fig. 3 und 4, das Stabfedernpaar 18 über die Verbindungsstellen 15 am Rahmen 9 zum Unterbau 1 weitergeführt und das Stützenpaar 17 ebenfalls über die Verbindungsstelle 16 am Rahmen 9 bis zum Schwingchassis 1 verlängert, dann kann die Federung 3 des Schwingchassis 2, die in den Fig. 1 und 2 gezeigt ist, in Wegfall kommen, da es durch diese Massnahme möglich wird, durch die Stützenpaare 17 und 18 allein die erforderliche Federung zu bewirken.

**Patentansprüche**

1. Einrichtung zur Schwingungsreduktion in einem Schallplattenspieler, insbesondere für Rundfunkstudios, mit in einem Unterbau (1) federnd gelagerten oder aufgehängten Schwingchassis (2), welches ein Tonabnehmersystem und einen von einem Motor über einen Riemen oder direkt angetriebenen Plattenteller trägt, dadurch gekennzeichnet, dass die Lagerung bzw. Aufhängung des Schwingchassis (2) von einem Schwingsystem (8) gebildet ist, das zwei senkrecht zueinander angeordnete und über einen Rahmen (9) miteinander verbundene Stabfedernpaare (10, 11; 17, 18) aufweist, von denen das eine Stabfedernpaar (11; 17) mit dem Schwingchassis (2) und das andere Stabfedernpaar (10, 18) mit dem Unterbau (1) verbunden sind.

2. Einrichtung nach Anspruch 1, dadurch gekennzeichnet, dass an den Verbindungsstellen (16) zwischen dem Schwingsystem (8) und dem Schwingchassis (2) sowie dem Unterbau (1) Dämpfungs- bzw. Isoliermittel (15) vorgesehen sind.

3. Einrichtung nach Anspruch 1 oder 2, dadurch gekennzeichnet, dass die Schwingfrequenz des Schwingchassis (2) in vertikaler Richtung (Z-Richtung) sich von der Schwingfrequenz bzw. den Schwingfrequenzen der beiden lateralen Richtungen (X- und Y-Richtung) unterscheidet.

4. Einrichtung nach einem der Ansprüche 1 bis 3, dadurch gekennzeichnet, dass die Federstäbe (10, 11; 17, 18) in einer Ebene liegen.

5. Einrichtung nach Anspruch 2, dadurch gekennzeichnet, dass die Stabfedern (10, 11; 17, 18) um die jeweiligen Biegeachsen verschiedene Trägheitsmomente aufweisen.

6. Einrichtung nach einem der Ansprüche 1 bis 5, dadurch gekennzeichnet, dass der Massenmittelpunkt des Schwingchassis (2) mit dem Massenmittelpunkt des Schwingsystems (8) zusammenfällt.

7. Einrichtung nach einem der Ansprüche 2 bis 6, dadurch gekennzeichnet, dass die Stabfedern (10, 11; 17, 18) an den Kreuzungsstellen (13) zur berührungsfreien Anordnung eine Krümmung (14) aufweisen (Fig. 5).

8. Einrichtung nach einem der Ansprüche 1 bis 7, dadurch gekennzeichnet, dass mit jeweils den einen Enden die Stabfedern des einen Stabfedernpaares (10) am Unterbau (1) und des anderen Stabfedernpaares (11) am Schwingchassis (2) und mit jeweils den anderen Enden am Rahmen (9) befestigt sind (Fig. 1 und 2).

9. Einrichtung nach einem der Ansprüche 1 bis 7, dadurch gekennzeichnet, dass die Stabfedern (17, 18) über Rahmenverbindungsstellen (16) hinausgeführt sind und die Enden der Stabfedern des einen Stabfedernpaares (18) am Unterbau (1) und die Enden der Stabfedern des anderen Stabfedernpaares (17) am Schwingchassis (2) befestigt sind (Fig. 3 und 4).

10. Einrichtung nach Anspruch 9, dadurch gekennzeichnet, dass die über die Rahmenverbindungsstellen (16) hinausgeführten Stabfedern (17, 18) allein die Federung der Aufhängung bzw. Lagerung des Schwingchassis (2) bilden.

**Claims**

1. A device for reducing vibrations in a record payer, in particular for broadcasting stations, including an oscillation-damping chassis (2), which is spring-supported or suspended in a base structure (1) for supporting a pick-up system, and a record turntable driven via a belt or directly by a motor, characterized in that the support or suspension of the oscillation-damping chassis (2) is formed by an oscillation-damping system (8) having two barspring pairs (10, 11; 17, 18) arranged to be perpendicular to each other and connected together by a frame (9), one of said barsprings pairs (11; 17) being connected to the oscillation-damping chassis (2) and the other bar-spring pair (10; 18) being connected to the base structure (1).

2. A device according to claim 1, characterized in that damping or insulating means (15) are provided at the connection positions (16) between the oscillation-damping system (8) and the oscillation-damping chassis (2) as well as the base structure (1).

3. A device according to claim 1 or 2, characterized in that the oscillation frequency of the oscillation-damping chassis (2) in vertical direction (Z-direction) differs from the oscillation frequency or the oscillation frequencies in the two lateral directions (X and Y directions).

4. A device according to any one of claims 1 to 3, characterized in that the bar spring bars (10, 11; 17, 18) are disposed within the same plane.

5. A device according to claim 2, characterized in that the bar springs (10, 11; 17, 18) have various moments of inertia about the associated bending axes.

6. A device according to any one of claims 1 to 5, characterized in that the centre of mass of the oscillation-damping chassis (2) coincides with the centre of mass of the oscillation-damping system (8).

7. A device according to any one of claims 2 to 6, characterized in that the bar springs (10, 11; 17, 18) are provided with a bend at the crossing positions (13) to give a contact-less arrangement (Fig. 5).

8. A device according to any one of claims 1 to 7, characterized in that one end of each bar spring of one bar spring pair (10) is fastened to the base structure (1) and of the other bar spring pair (11) is fastened to the oscillation-damping chassis, and the other ends are each fastened to the frame (9) (Fig. 1 and 2).

9. A device according to any one of claims 1 to 7, characterized in that the bar springs (17, 18) extend beyond the frame connection positions (16) and the ends of the bar springs of one bar spring pair (18) are fastened to the base structure (1) and the ends of the bar springs to the other bar spring pair (17) are fastened to the oscillation damping chassis (Fig. 3 and 4).

10. A device according to claim 9, characterized in that only the bar springs (17, 18) extending beyond the frame connecting positions (16) provide the elasticity of the suspension or support of the oscillation damping chassis (2).

**Revendications**

1. Dispositif pour réduire les vibrations dans une platine tourne-disques, notamment pour les studios de radiodiffusion, comportant un châssis oscillant (2) supporté ou suspendu élastiquement dans un sous-châssis (1) et portant un système de lecture et un plateau entraîné par un moteur directement ou par l'intermédiaire d'une courroie, caractérisé en ce que le support ou la suspension du châssis oscillant (2) est constitué par un système oscillant (8) qui comporte deux paire de barres de torsion (10, 11; 17, 18) disposées perpendiculairement l'une à l'autre et reliées ensemble par l'intermédiaire d'un cadre (9), l'une des paires de barres de torsion (11; 17) étant reliée au châssis oscillant (2) et l'autre paire de barres de torsion (10; 18) étant reliée au sous-châssis (1).

2. Dispositif selon la revendication 1, caractérisé en ce qu'on prévoit aux endroits de liaison (16) entre le système oscillant (8) et le châssis oscillant (2) ainsi que le sous-châssis (1) des moyens d'amortissement ou d'isolation (15).

3. Dispositif selon les revendications 1 ou 2, caractérisé en ce que la fréquence d'oscillations du châssis oscillant (2) dans la direction verticale (direction Z) diffère de la ou des fréquences d'oscillations dans les deux directions latérales (directions X et Y).

4. Dispositif selon l'une des revendications 1 à 3, caractérisé en ce que les barres de torsion (10, 11; 17, 18) sont placées dans un même plan.

5. Dispositif selon la revendication 2, caractérisé en ce que les barres de torsion (10, 11; 17, 18) ont des moments d'inertie différents autour des axes de flexion respectifs.

6. Dispositif selon l'une des revendications 1 à 5, caractérisé en ce que le centre de gravité du châssis oscillant (2) coïncide avec le centre de gravité du système oscillant (8).

7. Dispositif selon l'une des revendications 2 à 6, caractérisé en ce que les barres de torsion (10, 11; 17, 18) présentent un décrochement (14) à leurs points d'intersection (13) pour ne pas se toucher (fig. 5).

8. Dispositif selon l'une des revendications 1 à 7, caractérisé en ce que, par une de leurs extrémités, les barres de torsion de l'une des paires de barres (10) sont fixées sur le sous-châssis (1) et les barres de torsion de l'autre paire (11) sont fixées sur le châssis oscillant (2), tandis que, par leurs autres extrémités, les barres sont fixées sur le cadre (9) (figs. 1 et 2).

9. Dispositif selon l'une des revendications 1 à 7, caractérisé en ce que les barres de torsion (17, 18) se prolongent au-delà des points de liaison (16) avec le cadre et que les extrémités des barres de torsion de l'une des paires de barres (18) sont fixées sur le sous-châssis (1) et les extrémités des barres de torsion de l'autre paire de barres (17) sont fixées sur le châssis oscillant (2) (figs. 3 et 4).

10. Dispositif selon la revendication 9, caractérisé en ce que les barres de torsion (17, 18) dépassant au-delà des points de liaison avec le cadre (16) constituent à elles seules le système amortisseur de la suspension ou du support du châssis oscillant (2).

FIG.1

FIG.2

# FIG. 3

# FIG. 4

# FIG. 5